(19) Europäisches Patentamt

European Patent Office

Office européen des brevets

(11) Veröffentlichungsnummer: **0 424 713 A2**

# (12) EUROPÄISCHE PATENTANMELDUNG

(21) Anmeldenummer: 90119203.9

(22) Anmeldetag: 06.10.90

(51) Int. Cl.⁵: **C08G 18/64**, C08G 18/67, C08G 18/80, C09D 5/44

(30) Priorität: **12.10.89 AT 2351/89**

(43) Veröffentlichungstag der Anmeldung: **02.05.91 Patentblatt 91/18**

(84) Benannte Vertragsstaaten: **BE DE ES FR GB IT NL SE**

(71) Anmelder: **Vianova Kunstharz Aktiengesellschaft**

**A-8402 Werndorf(AT)**

(72) Erfinder: **Der Erfinder hat auf seine Nennung verzichtet**

(54) **Härtungskomponente für Lackbindemittel, insbesonders für kathodisch abscheidbare Lacke, Verfahren zur Herstellung und Verwendung der Härtungskomponente in Lacken.**

(57) Die Erfindung betrifft eine Härtungskomponente für Lackbindemittel, insbesonders für kathodisch abscheidbare Lacke, auf der Basis von höhermolekularen Polyisocyanatverbindungen, deren freie Isocyanatgruppen durch eine Kombination aus Hydroxyethyl(meth)acrylat, epsilon-Caprolactam und/oder Butanonoxim und gegebenenfalls einem N,N-Dialkylethanolamin blockiert sind. Die Produkte werden durch Umsetzung eines Polyamidaminharzes oder einer Polyaminverbindung und/oder gegebenenfalls eines modifizierten Epoxidharzes mit in entsprechender Weise halbblockierten Diisocyanaten hergestellt.

Durch die Verwendung dieser Härtungskomponente werden die Elastizität und die Steinschlagfestigkeit der Lackfilme auch bei höheren Schichtstärken wesentlich verbessert.

EP 0 424 713 A2

# HÄRTUNGSKOMPONENTE FÜR LACKBINDEMITTEL, INSBESONDERS FÜR KATHODISCH ABSCHEIDBARE LACKE, VERFAHREN ZUR HERSTELLUNG UND VERWENDUNG DER HÄRTUNGSKOMPONENTE IN LAKKEN.

Die Erfindung betrifft eine Härtungskomponente für Lackbindemittel, insbesonders für kathodisch abscheidbare Lacke, auf der Basis von höhermolekularen Polyisocyanatverbindungen, deren freie Isocyanatgruppen in spezifischer Weise blockiert sind.

Die Vernetzung von Hydroxyl- und/oder Aminogruppen tragenden Harzkomponenten durch Reaktion mit blockierten Isocyanatverbindungen ist seit langem bekannt und wird in vielen Abwandlungen, und gegebenenfalls in Kombination mit anderen Vernetzungsmechanismen, auch in kathodisch abscheidbaren Lackbindemitteln praktisch eingesetzt.

Mit den bisher in der Praxis verwendeten Vernetzungskomponenten konnte zwar durch entsprechende Katalyse mit Schwermetallen eine ausreichende Vernetzung erzielt werden und damit die Ansprüche der Verarbeiter bezüglich der Korrosionsfestigkeit der Lackierung und der notwendigen Stabilität des Badmaterials bei der Elektrotauchlackierung erfüllt werden, der besondere Nachteil der bekannten Produkte liegt jedoch in einer mangelhaften Flexibilität der gehärteten Lackfilme bei höheren Schichtstärken, d.h. im Bereich von über 20 μm. Dieser Nachteil wird besonders bei der Steinschlagbeanspruchung der Lackierungen offenbar.

Es wurde zwar versucht, diesen Nachteil durch entsprechende Modifikation der anderen in einer Lackformulierung eingesetzten Bindemittelkomponenten zu überwinden, doch führt der Einbau flexibilisierender Segmente in das Basisharz oder die Verwendung zusätzlicher entsprechender Komponenten zu Schwachstellen in der Filmstruktur.

Es wurde nun gefunden, daß dieses Nachteile durch Härtungskomponenten, die Umsetzungsprodukte aus Hydroxyl-und/oder Aminogruppen enthaltenden Verbindungen und halbblockierten Diisocyanaten darstellen,überwunden werden, wenn als Blockierungsmittel eine Kombination aus Hydroxyethyl(meth)acrylat, epsilon-Caprolactam und/oder Butanonoxim und gegebenenfalls einem N,N-Dialkylethanolamin eingesetzt wird.

Die vorliegende Erfindung betrifft demgemäß eine Härtungskomponente für Hydroxylgruppen und/oder Aminogruppen aufweisende Lackbindemittel auf der Basis von blokkierten Polyisocyanatverbindungen, welche dadurch gekennzeichnet ist, daß sie durch vollständige oder teilweise Reaktion der Hydroxyl- und/oder Aminogruppen eines Polyamidaminharzes und/oder einer Polyaminverbindung und/oder gegebenenfalls eines modifizierten Epoxidharzes, die eine H-aktive Equivalentmasse von 60 bis 160 aufweisen, mit halbblockierten Diisocyanaten erhalten wurde, wobei das Blockierungsmittel aus einer Kombination von 10 - 80 Mol% Hydroxyethyl(meth)acrylat, 20 - 80 Mol% epsilon-Caprolactam und/oder Butanonoxim und gegebenenfalls 10- 50 Mol% Dimethylethanolamin und/oder Diethylethanolamin besteht und wobei die Summe der Prozentzahlen 100 ergeben muß.

Die Erfindung betrifft weiterhin das Verfahren zur Herstellung einer Härtungskomponente für Hydroxylgruppen und/oder Aminogruppen aufweisende Lackbindemittel, insbesonders für kathodisch abscheidbare Lacke, auf der Basis von blockierten Polyisocyanatverbindungen, welches dadurch gekennzeichnet ist, daß man die Hydroxyl- und/oder Aminogruppen eines Polyamidaminharzes und/oder einer Polyaminverbindung und/oder gegebenenfalls eines modifizierten Epoxidharzes, die eine H-aktive Äquivalentmasse von 60 bis 160 aufweisen, mit halbblockierten Diisocyanaten bei 30 bis 80° C, vorzugsweise in Gegenwart reaktionsinerter Lösungsmittel, umsetzt, wobei als Blockierungsmittel eine Kombination aus 10 - 80 Mol% Hydroxyethyl(meth)acrylat, 20 - 80 Mol% epsilon-Caprolactam und/oder Butanonoxim und gegebenenfalls 10 - 50 Mol% Dimethylethanolamin und/oder Diethylethanolamin eingesetzt wird und wobei die Summe der Prozentzahlen 100 ergeben muß.

Die Erfindung betrifft weiterhin die Verwendung der beanspruchten Vernetzungskomponenten in Lackbindemittelkombinationen, vorzugsweise in kathodisch abscheidbaren Elektrotauchlacken.

In Kombination mit Hydroxyl- und/oder Aminogruppen aufweisenden Lackbindemitteln, wie sie aus dem Stand der Technik bekannt sind, ergeben die erfindungsgemäßen Vernetzungskomponenten Filme mit ausgezeichneten Korrosionsschutzeigenschaften, die überdies auch bei Schichtstärken von 25 μm und darüber ausgezeichnete Flexibilität und Haftfestigkeit aufweisen. Durch diese Kombination von Eigenschaften zeichnen sich die unter Verwendung der erfindungsgemäßen Vernetzungskomponenten erhaltenen Lackfilme durch überlegene Elastizität und Steinschlagfestigkeit aus. Als Badmaterial in kathodisch abscheidbaren Elektrotauchlacken zeigen Kombinationen mit diesen Vernetzungskomponenten die für die Praxis erforderliche Badstabilität.

Als Hydroxyl- und/oder Aminogruppen tragende Verbindungen für die Umsetzung mit den halbblockierten Diisocyanaten werden Polyamidaminharze oder Polyaminverbindungen bzw. Mischungen dieser Verbindungen eingesetzt. Gegebenenfalls können, vorzugsweise jedoch nur anteilig, auch modifizierte Epoxidharze, wie Epoxidharzester oder Epoxidharzaminaddukte verwendet werden. Geeignete Verbindungen weisen Hydroxylgruppen und/oder primäre und/oder sekundäre Aminogruppen in einer Menge auf, die einer H-aktiven Äquivalentmasse von 60 bis 160 entsprechen. Als H-aktive Äquivalentmasse wird die Menge einer Verbindung in Gramm verstanden, in welcher 1 Mol isocyanatreaktive Wasserstoffatome enthalten ist.

Die als Grundkörper einsetzbaren Polyamidamine sind Umsetzungsprodukte von Polycarbonsäuren, insbesonders von aliphatischen Dicarbonsäuren, wie Adipinsäure oder Azelainsäure, oder von dimeren oder trimeren Fettsäuren mit Polyaminen. Sie weisen gewöhnlich Aminzahlen zwischen 250 und 500 mg KOH/g auf. Handelsübliche Polyamidaminharze sind, soferne sie bezüglich der Menge an isocyanatreaktiven Wasserstoffatomen den Anforderungen entsprechen, geeignete Ausgangsmaterialien für die erfindungsgemäßen Produkte.

Die für die erfindungsgemäßen Vernetzungskomponenten verwendbaren Polyaminverbindungen sind neben den üblichen längerkettigen Di- oder Triaminen mit primären und/oder sekundären Aminogruppen, beispielsweise Umsetzungsprodukte von primären Monoaminen oder Diaminen mit Monoepoxidverbindungen, die gegebenenfalls weiteren Reaktionsschritten, z.B. unter Bildung von substituierten Harnstoffen, unterworfen werden.

Zur Herstellung der Härtungskomponente werden diese Ausgangsmaterialien mit halbblockierten Diisocyanten umgesetzt, wobei als Blockierungsmittel eine Kombination von Hydroxyalkyl(meth)acrylaten und epsilon-Caprolactam und/oder Butanonoxim und gegebenenfalls Dimethyl- oder Diethylethanolamin verwendet werden.

Als Diisocyanate werden vorzugsweise Verbindungen eingesetzt, deren NCO-Gruppen unterschiedliche Reaktivität aufweisen. Beispiele dafür sind das 2,4-Toluylendiisocyanat (eventuell mit Anteilen von bis zu 20 % 2,6-Toluylendiisocyanat) oder das Isophorondiisocyanat.

Die Kombination der verschiedenen Blockierungsmittel in den erfindungsgemäßen Vernetzern besteht aus 10 - 80 Mol% Hydroxyalkyl(meth)acrylat, 20 - 80 Mol% epsilon-Caprolactam und/oder Butanonoxim und gegebenenfalls 10 - 50 Mol% Dimethylethanolamin, und/oder Diethylethanolamin. Vorzugsweise erfolgt die Halbblockierung mit 20 -50 Mol% Hydroxyethylmethacrylat und 50 - 80 Mol% epsilon-Caprolactam. Die %-Angaben beziehen sich auf eine NCO-Gruppe des Diisocyanates und müssen sich auf 100 ergänzen. Zur Vermeidung von Anteilen an nichtblockierten Diisocyanaten wird die Blockierungsmittelkombination vorteilhafterweise in einem molaren Überschuß von bis zu 20 % eingesetzt. Gemäß der üblichen Definition müssen die blockierten Gruppen bei den Lager- und Applikationsbedingungen stabil sein. Die halbblockierten Diisocyanate werden in einer Menge mit den obengenannten Verbindungen umgesetzt, daß eine ausreichende Vernetzungsdichte bei der Härtung mit der Basisharzkomponente resultiert. Die erfindungsgemäßen Vernetzungskomponenten müssen unter den für den Lack erforderlichen Verarbeitungsbedingungen für sich allein nicht wasserverdünnbar sein. Die Gegenwart hydrophiler oder protonisierbarer Gruppen kann die Badstabilität verbessern.

Die erfindungsgemäßen Härtungskomponenten werden in Kombination mit Bindemitteln, die Gruppen mit aktivem Wasserstoff, insbesonders Hydroxy- und/oder Aminogruppen aufweisen, eingesetzt.

Eine bevorzugte Gruppe sind Bindemittel auf Basis von Epoxidharz-Amin-Addukten, wie sie für den Einsatz bei der kathodischen Abscheidung nach dem Elektrotauchlakkierverfahren in großer Zahl in der Literatur beschrieben sind. Daneben kommen auch die ebenfalls aus der Literatur bekannten Bindemitteltypen auf Basis von Polyestern, Polyamiden, Polyacrylaten und von den diversen Mischtypen als Basisharze in Betracht. Die entsprechenden Auswahlkriterien für das jeweilige Anforderungsprofil sind dem Fachmann bekannt.

Das gleiche gilt auch für die Formulierung der Lacke und deren Applikation und Aushärtung. Auch die Verwendung von Katalysatoren für die Vernetzung solcher Lacksysteme und der Einsatz von Hilfslösungsmitteln und lacktechnischen Zusatzstoffen ist in der Fachliteratur bereits beschrieben und dem Fachmann bekannt.

Die Erfindung wird durch die nachstehenden Beispiele erläutert. Alle Angaben beziehen sich auf Gewichtsteile bzw. Gewichtsprozente, soferne nichts anderes angegeben ist.

Beispiel 1:

In einem geeigneten Reaktor werden 1827 Tle (10,5 Mol) Toluylendiisocyanat (handelsübliches Isomerengemisch mit 80 % 2,4-TDI) auf 30°C erwärmt. Innerhalb einer Stunde wird bei 30 bis 40°C eine Mischung aus 2212 Tlen Methylisobutylketon (MIBK), 478 Tlen (3,68 Mol) Hydroxyethylmethacrylat (HEMA), 1008 Tlen (8,92 Mol) epsilon-Caprolactam und 5 Tlen Hydrochinon zugesetzt. Nach Ende der Zugabe wird die Temperatur auf 60°C erhöht und die Reaktion bis zu einem NCO-Wert von 10,6 % geführt. Nach Kühlen auf 40°C wird innerhalb von 15 Minuten bei 40 bis 50°C eine Lösung aus 650 Tlen eines handelsüblichen Polyamidaminharzes (Basis: Dimere Fettsäuren/Polyamine; Aminzahl 340 - 380 mg KOH/g; H-aktive Äquivalentmasse ca. 130; VERSAMID 125, SCHERING AG, BRD), 440 Tlen MIBK und 6 Tlen Hydrochinon zugegeben und die Reaktion anschließend bei 60°C bis zur vollständigen Umsetzung der NCO-Gruppen weitergeführt.

Beispiel 2:

In gleicher Weise wie im Beispiel 1, wird zu 1392 Tlen (8,0 Mol) TDI eine Mischung aus 1080 Tlen MIBK, 247 Tlen (1,9 Mol) HEMA, 655 Tlen (5,8 Mol) epsilon-Caprolactam und 4 Tlen Hydrochinon bei 35 - 40°C in 45 Minuten zugetropft, bei 60°C bis zu einem NCO-Wert von 15,2 % reagiert und dann auf 25°C gekühlt. Bei 25 -30°C werden in 15 Minuten 222 Tle (1,9 Mol) Diethylethanolamin zugetropft und danach bis zu einem NCO-Wert von 10,7 % reagiert. Danach werden bei 25 - 35°C 475 Tle eines handelsüblichen Polyamidaminharzes (Aminzahl: 420 - 450 mg KOH/g; H-aktive Equivalentmasse ca. 95; EUREDUR 250; SCHERING AG, BRD) und 6 Tle Hydrochinon, gelöst in 206 Tlen MIBK, zugetropft, die Temperatur auf 70°C erhöht und die Reaktion bis zur vollständigen Umsetzung der NCO-Gruppen weitergeführt.

Beispiel 3:

In einem geeigneten Reaktor werden 238 Tle 2-Aminoethylpropandiol und 116 Tle Hexamethylendiamin-1,6 auf 50°C erwärmt. Dazu werden innerhalb einer Stunde 1000 Tle eines Glycidylesters einer tertiären $C_9$-$C_{11}$-Monocarbonsäure (CARDURA E 10, SHELL) zugegeben, wobei die Temperatur auf 130°C ansteigt. Die Temperatur wird eine weitere Stunde bei 130°C gehalten. Unter Zugabe von 477 Tlen eines aromatischen Kohlenwasserstoff-Lösungsmittels (SHELLSOL A, SHELL) und 477 Tlen N-Methyl-2-pyrrolidon wird der Ansatz auf 40°C gekühlt und anschließend innerhalb von 1 bis 2 Stunden bei 40°C mit 348 Tlen TDI versetzt. Nach der Zugabe wird der Ansatz 1 Stunde bei 70°C gehalten. Nach Zugabe von 132 Tlen Paraformaldehyd (91 % $CH_2O$) und 211 Tlen MIBK wird innerhalb einer Stunde auf 110°C erhitzt und unter azeotroper Destillation bei leichtem Vakuum die Temperatur auf 135°C gesteigert und solange gehalten, bis 72 Tle Reaktionswasser abgetrennt sind. Das Produkt weist eine Hydroxyl-Zahl von 128 mg KOH/g auf.

In einem zweiten Reaktor werden 731 Tle (4,2 Mol) TDI bei 30 bis 40°C innerhalb einer Stunde mit einer Mischung aus 164 Tlen (1,26 Mol) HEMA, 361 Tlen (3,2 Mol) epsilon-Caprolactam, 5 Tlen Hydrochinon und 336 Tlen MIBK versetzt, bei 60°C bis zu einem NCO-Wert von 13,2 % reagiert und anschließend auf 40°C gekühlt. Das teilblockierte TDI wird dem oben hergestellten Polyaminharz innerhalb 15 Minuten bei 60°C zugesetzt und der Ansatz bis zu einem NCO-Wert von 0 reagiert.

Beispiel 4:

In einem geeigneten Reaktor werden 1778 Tle (8,0 Mol) Isophorondiisocyanat in 1158 Tlen MIBK gelöst. Der Lösung wird bei 20 - 25°C in 1 Stunde eine Mischung aus 325 Tlen (2,75 Mol) Hydroxyethylacrylat, 600 Tlen (6,9 Mol) Butanonoxim und 4 Tlen Hydrochinon zugetropft. Das Reaktionsprodukt wird bei einer Temperatur von 25°C gehalten, bis der theoretische NCO-Wert von 9,8 % erreicht ist. Danach wird die Reaktion nach Zugabe einer Lösung von 475 Tlen des auch im Beispiel 2 eingesetzten Polyamidaminharzes in 204 Tlen Methylisobutylketon bei 60°C bis zum NCO-Wert von 0 weitergeführt.

Prüfung der erfindungsgemäßen Härtungskomponenten in Kombination mit kationischen Bindemitteln in kathodisch abscheidbaren Elektrotauchlacken.

Die Härtungskomponenten wurden in den in der Tabelle 1 zusammengefaßten Bindemittelkombinationen geprüft.

Die Bindemittelmischungen A 1 - A 4 wurden jeweils mit 36 ml 5n-Ameisensäure neutralisiert. Anschließend wurde aus den neutralisierten Bindemittelmischungen ein Lack nach folgender Formulierung hergestellt:

EP 0 424 713 A2

| 360 Tle | Festharz |
|---|---|
| 1,8 Tle | Farbruß |
| 30 Tle | Aluminiumsilikatpigment |
| 137,4 Tle | Titandioxid |
| 10,8 Tle | basisches Bleisilikatpigment |

Die Lacke wurden mit den in der Tabelle 1 angegebene Katalysatoren versetzt und mit deionisiertem Wasser auf einen Feststoffgehalt von 18 % verdünnt (K 1 Bleioctoat 31 %ig; K 2 Dibutylzinndilaurat 18%ig).

Nach einer Homogenisierungsphase von 24 Stunden wurden bei einer Lackbadtemperatur von 28°C, einer Beschichtungsspannung von 220 V und einer Beschichtungszeit von 3 Minuten Testbleche mit einer Schichtstärke von 25 μm bis 30 μm beschichtet. Als Testbleche dienten phospatierte Stahlbleche. Die Testbleche wurden 30 Minuten im Umluftofen bei 180°C eingebrannt. Der Grad der Aushärtung wurde nach 24 Stunden durch einen Test auf Lösungsmittelbeständigkeit festgestellt. In der Tabelle wird die Zahl der Doppelwischungen mit einem mit Aceton getränkten Wattebausch bei einem Auflagedruck von 1 kg angegeben, bei welcher noch keine Anlösung des Lackfilmes festgestellt werden kann.

Weitere mit den Prüflacken beschichtete Testbleche wurden mit einem beim Volkswagenwerk (BRD) eingesetzten Serienaufbau (Füller, Decklack "alpinweiß") fertiglakkiert und mit dem VW-spezifizierten Multisteinschlag getestet. (2 x 500 g Stahlschrot bei 2 bar).

Bewertung: Kennwert 1 bestes Ergebnis

Kennwert 10 schlechtestes Ergebnis (völlige Ablösung)

Zum Vergleich wurden beim zuletzt genannten Test zwei KTL-Serienmaterialien aus der Automobilindustrie geprüft. Die Materialien erreichten einen Kennwert von 3 bzw. 2 - 3.

Weiters wurde zum Vergleich der Lack aus der Kombination A1 ohne Zusatz einer Vernetzungskomponente geprüft. Die Steinschlagwerte liegen in diesem Fall bei 7 - 9.

Tabelle 1

| (Die in Klammern angegebenen Teile geben die Festharzmenge in Gew.Tlen an) | | | | |
|---|---|---|---|---|
| | A 1 | A 2 | A 3 | A 4 |
| Bindemittel X Tle | 354 (252) | -- | 221,5 (144) | -- |
| Bindemittel Y Tle | -- | 387,7 (252) | 151,9 (108) | 387 (252) |
| Härtungskomponent aus Bsp 1 Tle | 180 (108) | -- | -- | -- |
| 2 Tle | -- | 154 (108) | | -- |
| 3 Tle | -- | -- | 162 (108) | -- |
| 4 Tle | -- | -- | -- | 154,3 (108) |
| Katalysatorzusatz zum pigmentierten Lack Tle/Type | 11,6 K1 | -- | 20 K2 | 13,6 K2 |
| Lösungsmittelbeständigkeit des eingebrannten Lackfilms, Doppelwischungen | 100 | 50 | 100 | 100 |
| Steinschlagprüfung Kennwert | 1 - 2 | 2 | 1 - 2 | 1 |

5

Bindemittel X:

KTL-Bindemittel entsprechend AT 353 369.

Komponente (Xa):

520 Tle eines Epoxidharzes auf Bisphenol A-Basis (EEW ca. 260) werden in 465 Tlen Diethylenglykoldimethylether (DGE), bei 60 - 70 °C mit 564 Tlen eines Halbesters aus Tetrahydrophthalsäureanhydrid und Hydroxyethylmethacrylat versetzt und bei 100 -110 °C bis zu einer Säurezahl von unter 5 mg KOH/g reagiert. Anschließend wurden 750 Tle einer 70%igen Lösung eines basischen Monoisocyanates (aus TDI und Dimethylethanolamin) in DGE bei 60 - 70 °C zugesetzt und der Ansatz bis zu einem NCO-Wert von 0 reagiert.

Komponente (Xb):

400 Tle eines Epoxidharzes auf Bisphenol A-Basis (EEW ca. 200) werden in 172 Tlen DGE gelöst und innerhalb 1 Stunde bei 90 - 120 °C 210 Tle Diethanolamin zugegeben. Nach einer Nachreaktionszeit von 1 Stunde bei 150 °C werden bei 60 - 70 °C 830 Tle einer 70%igen Lösung in DGE eines ungesättigten Monoisocyanates (aus TDI und Hydroxyethylacrylat) zugesetzt und bis zu einem NCO-Wert von 0 reagiert.

Das Bindemittel X besteht aus einer Mischung von 100 Tlen (Xa) und 30 Tlen (Xb).

Bindemittel Y:

KTL-Bindemittelkomponente auf Epoxidharz-Aminadduktbasis.

190 Tle eines Epoxidharzes auf Bisphenol A-Basis (EEW ca. 200) und 1425 Tle eines Epoxidharzes auf Bisphenol A-Basis (EEW ca. 475) werden in 597 Tlen Ethylenglykolmonoethylether (EGL) gelöst und bei 60 - 80 °C mit 126 Tlen Diethanolamin versetzt. Nach 2 Stunden werden bei 80 - 120 °C 169 Tle N,N-Diethylpropandiamin-1,3 zugegeben. Nach weiteren 2 Stunden werden bei 120 °C 478 Tle eines Glycidylesters einer tertiären $C_9$-$C_{11}$-Monocarbonsäure zugegeben und 5 Stunden bei 130 °C reagiert. Der Ansatz wird mit EGL auf 65 % Harzgehalt verdünnt. Das Festharz hat eine Aminzahl von 0,1 mg KOH/g und eine Hydroxylzahl von 265 mg KOH/g.

## Ansprüche

1. Härtungskomponente für Hydroxygruppen und/oder Aminogruppen aufweisende Lackbindemittel auf der Basis von blockierten Polyisocyanatverbindungen, dadurch gekennzeichnet , daß sie durch vollständige oder teilweise Reaktion der Hydroxyl- und/oder Aminogruppen eines Polyamidaminharzes und/oder einer Polyaminverbindung und/oder gegebenenfalls eines modifizierten Epoxidharzes, die eine H-aktive Äquivalentmasse von 60 bis 160 aufweisen, mit halbblockierten Diisocyanaten erhalten wurde, wobei das Blockierungsmittel aus einer Kombination von 10 - 80 Mol% Hydroxyethyl(meth)acrylat, 20 - 80 Mol% epsilon-Caprolactam und/oder Butanonoxim und gegebenenfalls 10- 50 Mol% Dimethylethanolamin und/oder Diethylethanolamin besteht und wobei die Summe der Prozentzahlen 100 ergeben muß.

2. Härtungskomponente nach Anspruch 1, dadurch gekennzeichnet , daß sie als Blockierungsmittel 20 - 50 Mol% Hydroxyethylmethacrylat und 50 - 80 Mol% epsilon-Caprolactam enthält.

3. Verfahren zur Herstellung einer Härtungskomponente für Hydroxylgruppen und/oder Aminogruppen aufweisende Lackbindemittel, insbesonders für kathodisch abscheidbare Lacke, auf der Basis von blockierten Polyisocyanatverbindungen, dadurch gekennzeichnet , daß man die Hydroxyl- und/oder Aminogruppen eines Polyamidaminharzes und/oder einer Polyaminverbindung und/oder gegebenenfalls eines modifizierten Epoxidharzes, die eine H-aktive Äquivalentmasse von 60 bis 160 aufweisen, mit halbblockierten Diisocyanaten bei 30 bis 80 °C, vorzugsweise in Gegenwart reaktions inerter Lösungsmittel, umsetzt, wobei als Blockierungsmittel eine Kombination aus 10 - 80 Mol% Hydroxyethyl(meth)acrylat, 20 - 80 Mol% epsilon-Caprolactam und/oder Butanonoxim und gegebenenfalls 10 - 50 Mol% Dimethylethanolamin und/oder Diethylethanolamin eingesetzt wird und wobei die Summe der Prozentzahlen 100 ergeben muß.

4. Verfahren nach Anspruch 3, dadurch gekennzeichnet , daß man als Blockierungsmittel 20 - 50 Mol% Hydroxyethylmethacrylat und 50 - 80 Mol% epsilon-Caprolactam einsetzt.

5. Verfahren nach den Ansprüchen 3 und 4, dadurch gekennzeichnet , daß man als Polyaminverbindung ein Umsetzungsprodukt von primären Monoaminen und/oder Diaminen mit Monoepoxidverbindungen einsetzt.

6. Verfahren nach den Ansprüchen 3 und 4, dadurch gekennzeichnet , daß man als Polyaminverbindung ein Umsetzungsprodukt von primären Monoaminen und/oder Diaminen mit Epoxidverbindungen, welches weiter mit Isocyanatverbindungen umgesetzt und in Form des gebildeten substituierten Harnstoffs mit Formaldehyd reagiert wurde, einsetzt.

7. Verwendung der Härtungskomponente nach den Ansprüchen 1 und 2 in Lackbindemittelkombinationen, vorzugsweise in kathodisch abscheidbaren Elektrotauchlacken.